# DEMANDE DE BREVET EUROPEEN

(11) **EP 2 600 500 A2**
(43) Date de publication de la demande: **05.06.2013**
(21) Numéro de dépôt: 12191483.2
(22) Date de dépôt: 06.11.2012
(51) Int. Cl.: H02K 1/27

(54) **Rotor de machine électrique tournante et machine électrique tournante comprenant un tel rotor**

(30) Priorité: 01.12.2011 FR 1161023
(71) Demandeur: Valeo Equipements Electriques Moteur, 94046 Créteil Cedex (FR)
(72) Inventeur: Bouarroudj, Lilya, 94220 Charenton le Pont (FR); Rakotovao, Mamy, 94400 Vitry sur Seine (FR)

(57) **Abrégé**

Le rotor (1) selon l'invention comprend une pluralité de pôles magnétiques alternés formés à partir d'aimants permanents (3) agencés dans des premiers évidements (4) se prolongeant le long d'un axe (X-X') du rotor et répartis régulièrement entre une partie circonférentielle (5) et une partie centrale (6) de la masse magnétique (2) du rotor de manière à définir des sections polaires (7) circonférentielles. Les aimants permanents présentent une première section radiale polygonale et un premier plan de symétrie axial (P), et la partie centrale comportent des seconds évidements (16) se prolongeant le long de l'axe (X-X') et répartis régulièrement autour de l'axe (X-X'). Conformément à l'invention, le rotor comprend en outre des premières nervures axiales (17) formant première cloison entre les premiers et seconds évidements (4, 16). Des secondes nervures axiales (18) formant seconde cloison entre deux seconds évidements (16) consécutifs peuvent également être prévues.

## Description

### DOMAINE TECHNIQUE DE L'INVENTION

La présente invention concerne un rotor à aimants permanents destiné à une machine électrique tournante.

L'invention concerne également une machine électrique tournante comprenant un rotor de ce type, notamment pour des applications dans le domaine des véhicules automobiles.

### ARRIERE PLAN TECHNOLOGIQUE DE L'INVENTION

De par leurs performances accrues en termes de rendement et de puissance massique et volumique, les machines synchrones à aimants permanents trouvent aujourd'hui une large application dans le domaine des véhicules automobiles.

Ces machines électriques sont réalisables dans une large gamme de puissance et de vitesse et trouvent des applications aussi bien dans les véhicules de type « tout électrique » que dans les véhicules à bas CO₂ de types dits « mild-hybrid » et « full-hybrid » (en terminologie anglaise).

Les applications « mild-hybrid » concernent généralement des machines électriques de l'ordre de 8 à 10 KW, par exemple, un moteur électrique monté en face avant d'un moteur thermique et couplé à celui-ci par une courroie de transmission. Il est possible avec un tel moteur électrique de réduire la cylindrée de la motorisation thermique (« engine downsizing » en terminologie anglaise) en prévoyant une assistance électrique en couple qui fournit un appoint de puissance, notamment lors des reprises. De plus, une traction à faible vitesse, par exemple en environnement urbain, peut également être assurée par ce même moteur électrique.

Un autre exemple d'application de machines électriques de cette gamme de puissance est l'entraînement d'un compresseur centrifuge d'un système de double suralimentation d'un moteur thermique. Le compresseur électrique assiste à bas régime le turbo-compresseur entraîné par les gaz d'échappement et permet de franchir une étape supplémentaire dans la réduction des cylindrées.

Les applications de type « full-hybrid» concernent généralement des moteurs de 30 à 50 KW pour des architectures de type série et/ou parallèle avec un niveau d'intégration plus abouti du ou des moteurs électriques dans la chaîne de traction du véhicule.

Les remarquables performances des machines à aimants permanents actuelles sont pour une grande part dues aux développement des aimants aux terres rares tels que les aimants de type Néodyme-Fer-Bore (NeFeB), Samarium-Fer (SmFe), ou Samarium-Cobalt (SmCo), qui peuvent présenter des rémanences dépassant le tesla.

Cependant, des machines à aimants permanents comprenant un rotor présentant une structure dite "à concentration de flux" avaient de longue date permis d'obtenir des flux magnétiques importants avec des aimants de moindre rémanence, par exemples des aimants obtenus à partir de ferrites frittées ou liées.

De longue date également, les caractéristiques dimensionnelles et magnétiques ce type de structure ont été optimisées, soit en menant de nombreux essais, soit, plus récemment en réalisant des simulations sur ordinateur, de manière à améliorer le rendement électrique des machines.

Un exemple d'optimisation de la circulation du flux magnétique dans les pôles d'un rotor à aimants permanents a été divulgué en 1990 dans la demande de brevet d'invention FR 2.636.480.

Ce genre d'optimisations a reçu récemment un regain d'attention comme suite au renchérissement des aimants aux terres rares lié à une conjoncture géopolitique défavorable.

La mise en oeuvre d'aimants aux terres rares dans un rotor de machine électrique destinée aux applications de l'automobile n'étant plus en effet économiquement rentable, et probablement non pérenne, l'autre terme de l'alternative est constitué par les aimants basés sur des ferrites.

Mais la rémanence d'une ferrite étant plus faible que celle d'un aimant aux terres rares, le remplacement des aimants aux terres rares par des ferrites conduit à une machine de moindres performances.

### DESCRIPTION GENERALE DE L'INVENTION

Le but de la présente invention est donc d'optimiser l'agencement des aimants permanents à l'intérieur d'un rotor pour maximiser le flux magnétique dans les pôles et préserver ainsi notamment le couple de la machine.

Elle a précisément pour objet un rotor de machine électrique tournante comprenant une pluralité de pôles Nord et pôles Sud alternés et formés à partir d'une pluralité d'aimants permanents agencés dans des premiers évidements.

Ces premiers évidements se prolongent le long d'un axe du rotor et sont répartis régulièrement entre une partie circonférentielle et une partie centrale de la masse magnétique du rotor de manière à définir une pluralité de sections polaires circonférentielles.

Les aimants permanents du type de rotor dont il s'agit présentent une première section radiale polygonale et un premier plan de symétrie axial.

La partie centrale comporte, quant à elle, des seconds évidements se prolongeant le long de l'axe du rotor et répartis régulièrement autour de cet axe.

Le rotor selon l'invention est remarquable en ce qu'il comprend en outre des premières nervures axiales formant première cloison entre les premiers et seconds évidements et des secondes nervures axiales formant seconde cloison entre deux dits seconds évidements consécutifs, les premières nervures axiales présentant une première épaisseur prédéterminée de manière à rendre minimum un flux magnétique de fuite dans la partie centrale et à rendre maximum un flux magnétique utile circulant radialement dans chacune des sections polaires, les secondes nervures axiales présentant un second plan de symétrie axial, et la trace dans un plan radial de deux dites premières et secondes nervures axiales adjacentes est une figure en forme de T ou de L.

Dans un premier mode de réalisation préféré du rotor de machine électrique tournante selon l'invention, la trace dans un plan radial de deux des premières et secondes nervures axiales adjacentes est une figure en forme de T et la première épaisseur est sensiblement comprise entre 0,2 mm et 0,6 mm.

Dans un second mode de réalisation préféré du rotor de machine électrique tournante selon l'invention, la trace dans un plan radial de deux des premières et secondes nervures axiales adjacentes est une figure en forme de L et la première épaisseur est sensiblement comprise entre 0,4 mm et 1,0 mm.

On tire bénéfice du fait que dans l'un et l'autre modes de réalisation, les secondes nervures axiales présentent une seconde épaisseur égale au double de la première épaisseur prédéterminée.

L'invention concerne également une machine électrique tournante qui comprend un rotor présentant les caractéristiques ci-dessus.

Ces quelques spécifications essentielles auront rendu évidents pour l'homme de métier les avantages apportés par le rotor de machine électrique tournante selon l'invention, ainsi que par la machine électrique correspondante, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** montre une vue en coupe radiale simplifiée d'un rotor à aimants permanents dans le premier mode de réalisation de l'invention, agencé dans un stator, montré en coupe radiale partielle, d'une machine électrique tournante selon l'invention.
La **Figure 2** montre une vue en coupe radiale simplifiée d'un rotor à aimants permanents selon le second mode de réalisation de l'invention, agencé dans un stator, montré en coupe radiale partielle, d'une machine électrique tournante selon l'invention.
La **Figure 3** montre une vue en perspective d'un agencement d'un aimant permanent dans le premier mode de réalisation du rotor selon l'invention.
La **Figure 4** montre une vue en perspective d'un agencement d'un aimant permanent dans le second mode de réalisation du rotor selon l'invention.
La **Figure 5** montre un modèle simplifié de l'influence des première et seconde épaisseurs des premières et secondes nervures axiales sur la circulation des flux magnétiques dans le rotor selon l'invention.
La **Figure 6** montre les variations relatives du flux utile au voisinage d'un flux utile maximum en fonction de la première épaisseur des premières nervures axiales obtenues par le modèle simplifié montré sur la **Figure 2** dans l'un et l'autre modes de réalisation de l'invention.
La **Figure 7** montre les variations, au voisinage d'un maximum, de la constante de force électromotrice entre phases en fonction de la première épaisseur des premières nervures axiales obtenues par une simulation sur ordinateur d'une machine complète comprenant un rotor selon l'un ou l'autre mode de réalisation de l'invention.

### DESCRIPTION DES MODES DE REALISATIONS PREFERES DE L'INVENTION.

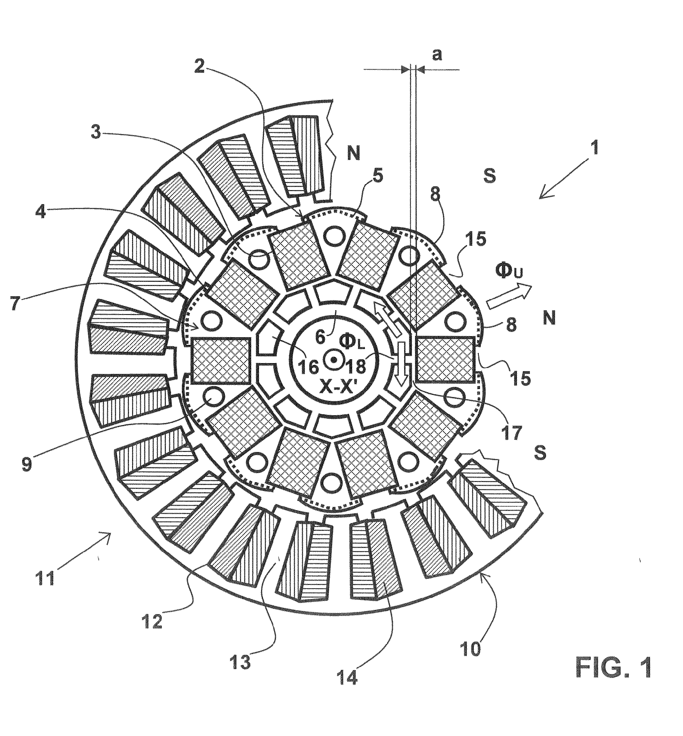

La coupe radiale simplifiée d'un rotor 1 à aimants permanents dans le premier mode de réalisation de l'invention, représentée sur la **Figure 1****,** montre bien l'agencement dans la masse magnétique 2 des aimants permanents 3 dans des premiers évidements 4 répartis régulièrement entre une partie circonférentielle 5 et une partie centrale 6 de manière à former une pluralité de pôles Nord N et pôles Sud S alternés.

Le rotor 1 selon l'invention est du type à concentration de flux. Les aimants permanents 3 sont de section sensiblement rectangulaire. Ils s'étendent symétriquement au voisinage de plans axiaux équi-angulaires.

Les premiers évidements 4 dans lesquels sont agencés les aimants permanents 3 délimitent dix sections polaires 7 circonférentielles.

L'ensemble de ces sections polaires 7 forme en coupe radiale une figure sensiblement circulaire à plusieurs lobes 8, correspondant à la saillance des pôles N, S.

Les sections polaires 7 s'étendent symétriquement au voisinage de plans axiaux équi-angulaires. Elles comportent des passages 9 agencés entre les aimants permanents 3 et destinés à recevoir des tirants amagnétiques maintenant les paquets de tôles métalliques formant des masses magnétiques 2, 10 du rotor 1 et d'un stator 11.

Ces passages 9 contribuent également au contrôle du champ magnétique dans le rotor 1.

Dans une forme de réalisation particulière de cette machine, le rotor 1 comportant dix aimants permanents 3 tourne à l'intérieur d'un stator 11 présentant une pluralité d'encoches 12 définissant une pluralité de dents statoriques 13 autour desquelles sont agencés des bobinages statoriques 14

Une réalisation concrète d'une machine comprenant un tel rotor 1 est par exemple un moteur/génératrice de 8 à 10 KW pour des applications dans des véhicules automobiles du type dits «mild-hybrid».

Dans son mode de fonctionnement en moteur cette machine peut être conçue pour le démarrage du moteur thermique, l'assistance en couple du moteur thermique, la traction électrique à faible vitesse du véhicule ainsi que pour l'entraînement d'un compresseur centrifuge.

Les bobinages statoriques 14 sont parcourus par un courant statorique et créent un champ magnétique tournant entraînant le rotor 1. Le couple moteur fourni dépend notamment de l'intensité du courant statorique et du flux magnétique dans le rotor 1.

Ainsi que cela a été expliqué en préambule, le remplacement des aimants permanents 3 aux terres rares par des aimants permanents 3 en ferrite nécessite une optimisation des pôles magnétiques N, S pour obtenir un flux magnétique similaire dans le rotor 1, et conserver ainsi un même couple moteur pour une même intensité statorique.

Des simulations sur ordinateur de machines électriques comprenant un rotor 1 ayant les caractéristiques ci-dessus ont permis à l'entité inventive d'établir la distribution du flux magnétique dans le rotor 1 et le stator 11.

Il a été établi que le flux magnétique créé par les aimants permanents 3 et circulant dans la masse magnétique 2 du rotor 1 se répartissait entre un flux magnétique utile ΦU circulant radialement dans une section polaire 7 et des flux magnétiques de fuite ΦL circulant dans une direction circonférentielle dans la partie circonférentielle 5 du rotor 1 et dans la partie centrale 6 de celui-ci.

Afin de diminuer ces flux magnétiques de fuiteΦL, il est connu de munir la partie circonférentielle 5 du rotor 1 de rainures axiales 15, qui sont agencées entre les sections polaires 7 en regard des aimants permanents 3 et qui forment ouverture des premiers évidements 4, de manière à constituer des barrières de flux.

Il est également connu, notamment de la demande de brevet d'invention FR 2.636.480, de constituer la partie centrale 6 du rotor 1 de métal amagnétique, de matériau isolant, ou simplement d'air, de manière à créer également des barrières de flux.

Toutefois, il ne semble pas qu'une solution optimale du rattachement des aimants permanents 3 et des sections polaires 7 à l'axe X-X' du rotor 1 prenant en compte des contraintes à la fois magnétiques et mécaniques soit connus.

Selon l'invention, les aimants permanents 3 et les sections polaires 7 sont isolés de l'axe X-X' du rotor 1 au moyen de seconds évidements 16 délimités par des premières et secondes nervures axiales 17, 18.

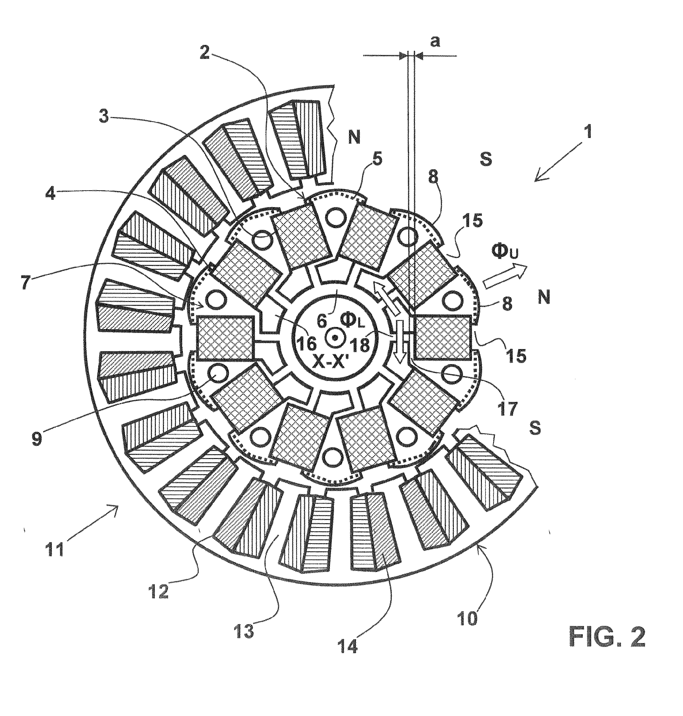

Comme le montrent bien les **Figures 1** **et** **2****,** les premières nervures axiales 17 forment première cloison entre les premiers évidements 4 et les seconds évidements 16.

Ces premières nervures axiales 17 supportent les aimants permanents 3 et relient mécaniquement les sections polaires 7 à l'axe X-X' du rotor 1 au moyen des secondes nervures axiales 18.

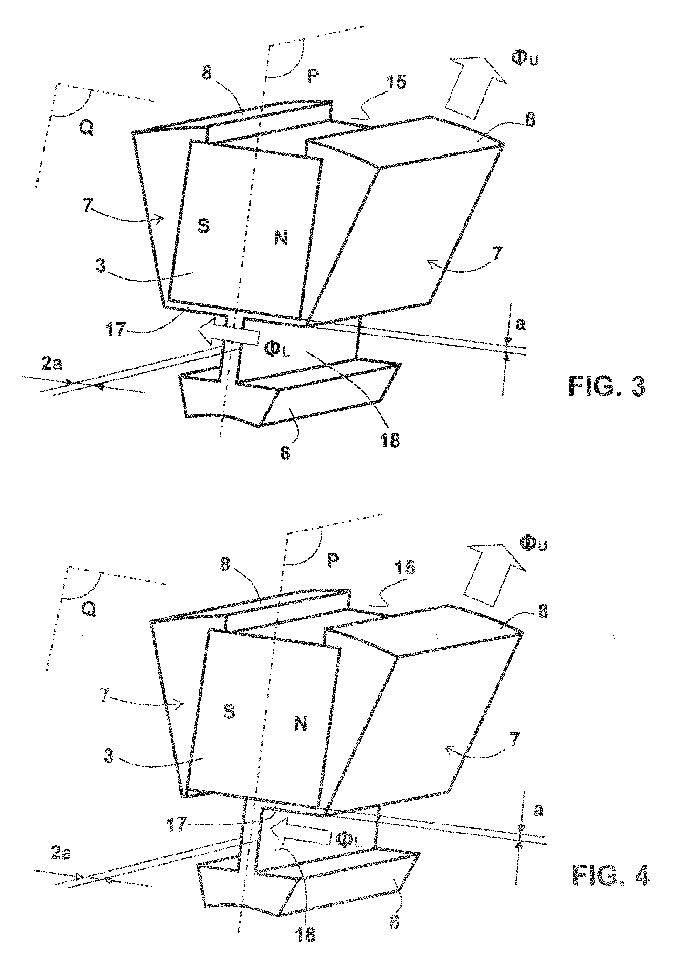

Comme le montrent bien les **Figures 3 et 4****,** chacune des secondes nervures axiales 18 présente un second plan de symétrie axial P confondu avec le premier plan de symétrie axial P de chacun des aimants permanents 3. Sa trace dans un plan radial Q forme avec la trace de chacune des premières nervures axiales 17 adjacente une figure soit en forme de T, soit en forme de L, selon l'un ou l'autre mode de réalisation de l'invention.

Dans le premier mode de réalisation, en "T", représenté sur les **Figures 1** **et** **3****,** les premières nervures axiales 17 relient entre elles deux sections polaires 7 successives.

Dans le second mode de réalisation, en "L", représenté sur les **Figures 2** **et** **4****,** les premières nervures axiales 17 ont une première largueur deux fois moindre et ne relient pas entre elles deux sections polaires 7 successives.

Le premier mode de réalisation présente une résistance mécanique plus grande que le second mode de réalisation, et permet donc de supporter des aimants permanents 3 ayant une masse plus importante, c'est-à-dire de susceptibles de créer un flux magnétique plus important. Mais les premières nervures axiales 17 dans cette configuration sont les sources de fuites magnétiques.

Le second mode de réalisation présente une résistance mécanique plus faible que le premier mode de réalisation, et ne supporte donc que des aimants permanents 3 ayant une masse plus faible, c'est-à-dire que le flux magnétique créé est moins important. Mais les fuites magnétiques dans les premières nervures axiales 17 dans cette configuration sont plus réduites.

Dans l'un et l'autre modes de réalisation, les premières nervures axiales 17 ont de préférence une première épaisseur a égale à la moitié d'une seconde épaisseur des secondes nervures axiales 18. De la sorte, cette première épaisseur a est un paramètre unique qui peut être prédéterminé pour rendre un flux magnétique de fuite ΦL minimum et un flux magnétique utile ΦU maximum.

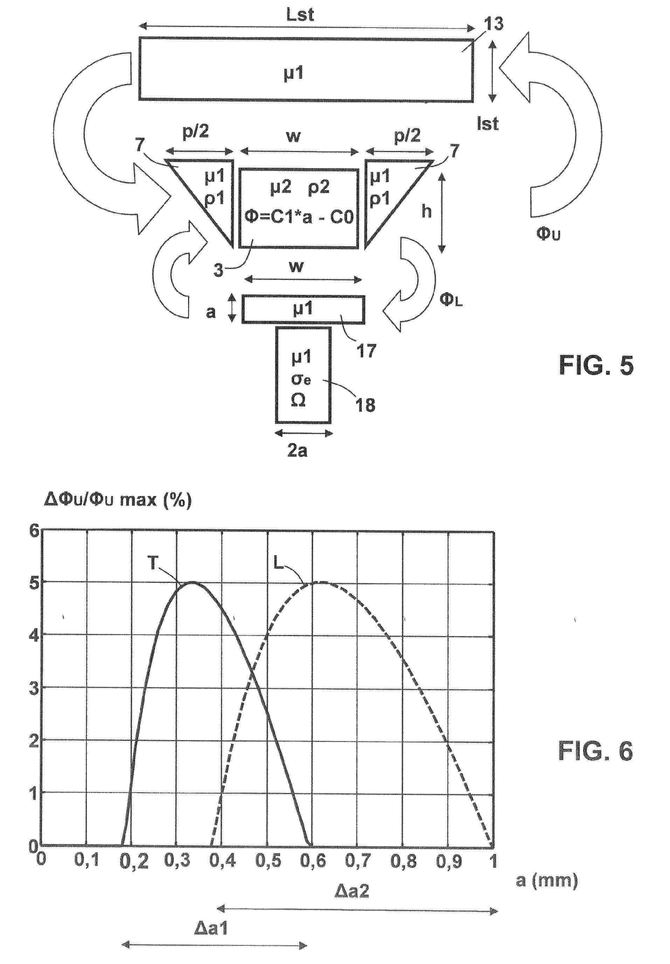

Un modèle simplifié de l'influence de la première épaisseur a sur la distribution des flux magnétiques utile et de fuite ΦU, ΦL dans le rotor 1 est montré sur la **Figure 5****.**

Dans ce modèle simplifié les efforts mécaniques pris en compte sont uniquement les efforts centrifuges exercés sur les premières et secondes nervures 17, 18, par les sections polaires 7 et les aimants permanents 3 en fonction de leurs masses et de la vitesse de rotation Ω du rotor 1.

Une première masse des sections polaires dépend d'une première densité ρ1, d'une hauteur h, et d'une deuxième largeur p.

Une deuxième masse des aimants permanents 3 dépend d'une seconde densité p2, d'une troisième largeur w , et de la hauteur h.

Une troisième masse des premières et secondes nervures 17, 18 est considérée comme négligeable.

Les flux magnétiques utile et de fuite ΦU, ΦL s'établissent dans le rotor 1 et le stator 11 en fonction d'une première réluctance, d'une deuxième réluctance et d'une troisième réluctance en parallèle.

La première réluctance résulte des premières et secondes nervures axiales 17, 18, de première et seconde épaisseurs a et 2a respectivement, les premières nervures axiales 17 ayant une première largeur égale à la troisième largeur w (ou à la moitié dans le second mode de réalisation, non représenté), et de première perméabilité relative µ1.

Une deuxième réluctance intervenant dans ce modèle simplifié est celle d'un circuit magnétique présentant la première perméabilité relative µ1, dans lequel circule le flux magnétique utile ΦU entre les pôles N, S du rotor 1 et les dents statoriques 13 du stator 11, et ayant une première longueur Lst. et une quatrième largeur lst.

Les aimants permanents 3 sont considérés comme un générateur de flux Φ= ΦU + ΦL présentant une troisième réluctance en parallèle résultant d'un milieu de la troisième largeur w, d'une hauteur égale à h, et d'une seconde perméabilité relative µ2.

Le flux magnétique de fuite ΦL décroît quand la première réluctance augmente, c'est-à-dire quand la première épaisseur a décroît, mais cette première épaisseur a est bornée inférieurement par le fait que les secondes nervures axiales 18 doivent supporter les efforts de traction exercés par les première et seconde masses en rotation dans une limite supérieure proportionnelle à une constante de limite élastique σe et à cette première épaisseur a (pour une seconde longueur des secondes nervures axiales données).

Les première et seconde masses en rotation sont donc limitées par cette première épaisseur a, et notamment la deuxième masse des aimants permanents 3. De ce fait, le flux magnétique total Φ disponible étant proportionnel à la deuxième masse, dans ce modèle simplifié, on considère que le flux magnétique total Φ généré par les aimants permanents est une fonction linéaire de la première épaisseur a.

Le flux magnétique total Φ croissant avec la première épaisseur a, ainsi que le flux magnétique de fuite ΦL, il existe une valeur prédéterminée de cette première épaisseur a pour laquelle le flux magnétique de fuite ΦL est minimum et le flux magnétique utile ΦU est maximum, que le modèle simplifié met en évidence.

La Figure 6 montre les variations relatives du flux magnétique utile ΦU au voisinage du maximum ΦU max en fonction de a dans le premier mode de réalisation "T" (courbe en trait continu) et dans le second mode de réalisation "L" (Courbe en pointillé) obtenues par ce modèle simplifié.

Dans le premier mode de réalisation "T", une première fourchette Δa1 des valeurs de a comprises entre sensiblement 0,2 mm et 0,6 mm permet de rendre le flux magnétique utile ΦU maximum, le flux utile ΦU ne variant que de 5% dans cette première fourchette Δa1.

Dans le second mode de réalisation "L", une seconde fourchette Δa2 des valeurs de a comprises entre sensiblement 0,4 mm et 1,0 mm permet de rendre le flux magnétique utile ΦU maximum, le flux utile ΦU ne variant que de 5% dans cette seconde fourchette Δa2.

Le modèle simplifié montre que ces fourchettes dimensionnelles en mm Δa1, Δa2 des premières nervures 17 sont stables en fonction des dimensions des aimants permanents 3 et des sections polaires 7, car elles dépendent principalement des constantes physiques des matériaux utilisés (perméabilité magnétique relative µ1, µ2, densité ρ1, p2, constante de limite élastique σe) a priori invariables dans une technologie donnée.

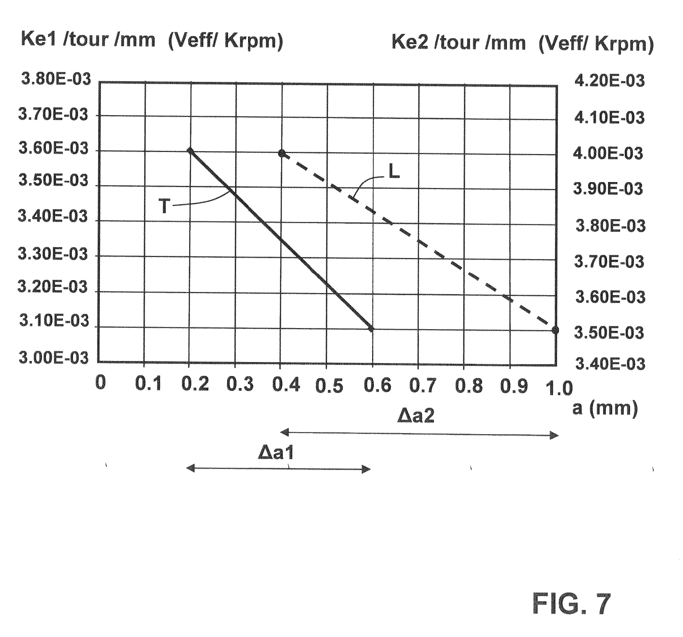

Une simulation sur ordinateur plus réaliste d'une machine électrique tournante comprenant un rotor 1 selon l'invention, confirme l'existence de fourchettes optimales, comme le montre la **Figure 7****.**

Cette figure montre l'évolution de la constante de force électromotrice entre phases Ke1, Ke2 pour des valeurs de la première épaisseur a comprises sensiblement entre 0,2 mm et 0,6 mm (mode de réalisation en "T", Ke1) ou entre 0,4 mm et 1,0 mm (mode de réalisation en "L", Ke2).

Cette constante Ke1, Ke2 est représentative du flux magnétique utile ΦU. On constate que les plages de valeurs optimales Δa1, Δa2 correspondent à celles du modèle simplifié.

En valeur absolue, le flux magnétique utile ΦU est plus élevé dans une configuration en "L" (Ke2 max = 4.00 E -03 Veff/ Krpm) que dans une configuration en "T" (Ke1 max = 3.60 E -03 Veff/ Krpm).

La structure optimisée du rotor 1 concourt à la préservation des performances de la machine quand des ferrites sont utilisées à la place d'aimants aux terres rares, sans trop accroître la masse des aimants permanents 3.

A technologie constante, l'invention qui contribue à l'augmentation du flux magnétique dans le rotor 1 permet également de réduire l'intensité du champ magnétique tournant créé par le stator 11 nécessaire pour produire un couple donné, et par conséquent permet de réduire la masse de cuivre nécessaire pour réaliser les bobinages statoriques 14.

La réduction de la masse des aimants permanents 3 et du cuivre permet de diminuer les coûts de fabrication et procure donc un avantage commercial dans le domaine très concurrentiel des équipements des véhicules.

Comme il va de soi, l'invention ne se limite pas aux seuls modes de réalisation préférentiels décrits ci-dessus.

D'autres modes de réalisation où les figures formées par les traces des premières et secondes nervures axiales 17, 18 dans un plan radial Q seraient autres que des "T" ou des "L", et présenteraient notamment des "V inversés" formés par la trace des secondes nervures axiales 18, correspondant à d'autres essais ou simulations de machines électriques tournantes comportant un rotor du type décrit, ne sortiraient pas du cadre de la présente invention dans la mesure où ils résultent des revendications ci-après.

## Revendications

1. Rotor (1) de machine électrique tournante comprenant une pluralité de pôles Nord (N) et pôles Sud (S) alternés et formés à partir d'une pluralité d'aimants permanents (3) agencés dans des premiers évidements (4) se prolongeant le long d'un axe (X-X') dudit rotor (1) et répartis régulièrement entre une partie circonférentielle (5) et une partie centrale (6) de la masse magnétique (2) dudit rotor (1) de manière à définir une pluralité de sections polaires (7) circonférentielles, lesdits aimants permanents (3) présentant une première section radiale polygonale et un premier plan de symétrie axial (P), et ladite partie centrale comportant des seconds évidements (16) se prolongeant le long dudit axe (X-X') et répartis régulièrement autour dudit axe (X-X'), **caractérisé en ce qu'**il comprend en outre des premières nervures axiales (17) formant première cloison entre lesdits premiers et seconds évidements (4, 16) et des secondes nervures axiales (18) formant seconde cloison entre deux dits seconds évidements (16) consécutifs, lesdites premières nervures axiales (17) présentant une première épaisseur (a) prédéterminée de manière à rendre minimum un flux magnétique de fuite (ΦL) dans ladite partie centrale (6) et à rendre maximum un flux magnétique utile (ΦU) circulant radialement dans chacune desdites sections polaires (7), lesdites secondes nervures axiales (18) présentant un second plan de symétrie axial (P), et la trace dans un plan radial (Q) de deux dites premières et secondes nervures axiales (17, 18) adjacentes est une figure en forme de T ou de L.

2. Rotor (1) de machine électrique tournante selon la revendication 1, **caractérisé en ce que** la trace dans un plan radial (Q) de deux dites premières et secondes nervures axiales (17, 18) adjacentes est une figure en forme de T et ladite première épaisseur (a) est sensiblement comprise entre 0,2 mm et 0,6 mm.

3. Rotor (1) de machine électrique tournante selon la revendication 1, **caractérisé en ce que** la trace dans un plan radial (Q) de deux dites premières et secondes nervures axiales (17, 18) adjacentes est une figure en forme de L et ladite première épaisseur (a) est sensiblement comprise entre 0,4 mm et 1,0 mm.

4. Rotor (1) de machine électrique tournante selon l'une quelconque des revendications 1 à 3 précédentes, **caractérisé en ce que** lesdites secondes nervures axiales (18) présentent une seconde épaisseur (2a) égale au double de ladite première épaisseur (a).

5. Machine électrique tournante, **caractérisée en ce qu'**elle comprend un rotor (1) selon l'une quelconque des revendications 1 à 5 précédentes.
